# EUROPÄISCHE PATENTANMELDUNG

(11) **EP 4 191 479 A1**
(43) Veröffentlichungstag der Anmeldung: **07.06.2023**
(21) Anmeldenummer: 21212420.0
(22) Anmeldetag: 06.12.2021
(51) Int. Cl.: G06N 3/08

(54) **VERFAHREN UND SYSTEM ZUM ERZEUGEN EINER LOGISCHEN REPRÄSENTATION EINES DATENSATZES SOWIE TRAININGSVERFAHREN**

(71) Anmelder: dSPACE GmbH, 33102 Paderborn (DE)
(72) Erfinder: Karaman, Luka, 10000 Zagreb (HR); Diklic, Vjekoslav, 10000 Zagreb (HR); Sowa, Cathrina, 33102 Paderborn (DE); Püschl, Thorsten, 33102 Paderborn (DE)

(57) **Zusammenfassung**

Die Erfindung betrifft ein Verfahren und System (1) zum Erzeugen einer komplexitätsreduzierten logischen Repräsentation (10) eines Datensatzes von Sensordaten, mit einem Anwenden (S3) eines Algorithmus (A) auf den zweiten Datensatz (DS2) zur Komplexitätsreduzierung des logischen Szenarios (L), und einem Ausgeben (S4) eines, ein komplexitätsreduziertes logisches Szenario (L) des zweiten Datensatzes (DS2) repräsentierenden dritten Datensatzes (DS3). Die Erfindung betrifft des Weiteren ein Verfahren zum Bereitstellen eines trainierten Algorithmus (A) maschinellen Lernens zum Erzeugen einer komplexitätsreduzierten Repräsentation eines Datensatzes von Sensordaten.

## Beschreibung

Die vorliegende Erfindung betrifft ein Verfahren zum Erzeugen einer komplexitätsreduzierten logischen Repräsentation eines Datensatzes von Sensordaten.

Die vorliegende Erfindung betrifft das Verfahren zum Bereitstellen eines trainierten Algorithmus (A) maschinellen Lernens zum Erzeugen einer komplexitätsreduzierten Repräsentation eines Datensatzes von Sensordaten.

Darüber hinaus betrifft die vorliegende Erfindung ein System zum Erzeugen einer komplexitätsreduzierten logischen Repräsentation eines Datensatzes von Sensordaten.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Zur Erstellung von Testszenarien für Simulationen ist die Durchführung von Testfahrten erforderlich. Die hierdurch gewonnenen Sensordaten werden sodann in ein logisches Szenario abstrahiert.

"Szenario-Optimierung für die Absicherung von automatisierten und autonomen Fahrsystemen" (Florian Hauer, B. Holzmüller, 2019) offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

Deren Parameter spannen einen Suchraum auf, aus dem die passenden Szenarien zu identifizieren sind. Hierfür werden suchebasierte Verfahren verwendet, die sich an einer Gütefunktion orientieren und somit die Szenarien identifizieren, in denen das System das schlechteste Verhalten zeigt. Dadurch soll ein zielgerichtetes Testen mit automatischer Testfallauswertung ermöglicht werden.

Um ein solches Verfahren optimal einsetzen zu können, ist es jedoch erforderlich, die bei Testfahrten erzeugten Sensordaten effektiv in ein logisches Szenario zu abstrahieren.

Die Schwierigkeit dabei liegt darin, die Gesamtsituation, die in den Sensordaten sichtbar ist, beibehalten, aber es gleichzeitig zu ermöglichen, Variablen zu ändern, um das Szenario zur Erzeugung neuer Testfälle für die Simulation zu variieren.

Bei einer hohen Abstraktion besteht dabei das Problem, dass anfängliche Einstellungen von Variablenwerten die Situation der Daten nicht akkurat darstellen. Segmentierungsalgorithmen zur Verallgemeinerung der Daten weisen keine Informationen über die Qualität des erzeugten logischen Szenarios (L) auf.

Dies führt entweder zu einer geringen Anzahl von Datensegmenten, bei denen eine Genauigkeit der Trajektorien zwischen den Sensordaten und den logischen Szenarien nicht zufriedenstellend ist, oder zu einer hohen Anzahl von Datensegmenten, was sich in einer schlechten Generalisierung und einer größeren Anzahl von zu ändernden Parametern äußert.

Mehr Parameter führen auch zu dem Problem, dass man mehr als eine Variable ändern muss, um ein Szenario auf sinnvolle Weise zu verändern.

Demzufolge besteht ein Bedarf, bestehende Verfahren zur Abstraktion von Sensordaten in logische Szenarien dahingehend zu verbessern, dass bei einer geringstmöglichen Anzahl von Datensegmenten das von den Sensordaten umfasste Szenario bestmöglich beibehalten werden kann.

Es ist daher Aufgabe der Erfindung, ein Verfahren zum Erzeugen einer komplexitätsreduzierten logischen Repräsentation eines Datensatzes von Sensordaten bereitzustellen, welches einen hohen Abstraktionsgrad bei gleichzeitig bestmöglicher Beibehaltung des von den Sensordaten umfassten Szenarios ermöglicht.

### Offenbarung der Erfindung

Die Aufgabe wird erfindungsgemäß durch ein Verfahren zum Erzeugen einer komplexitätsreduzierten logischen Repräsentation eines Datensatzes von Sensordaten mit den Merkmalen des Patentanspruchs 1 gelöst.

Die Aufgabe wird erfindungsgemäß ferner durch ein Verfahren zum Bereitstellen eines trainierten Algorithmus maschinellen Lernens zum Erzeugen einer komplexitätsreduzierten Repräsentation eines Datensatzes von Sensordaten mit den Merkmalen des Patentanspruchs 14 gelöst.

Die Aufgabe wird erfindungsgemäß ferner durch ein System zum Erzeugen einer komplexitätsreduzierten logischen Repräsentation eines Datensatzes von Sensordaten mit den Merkmalen des Patentanspruchs 15 gelöst.

Die Erfindung betrifft ein Verfahren zum Erzeugen einer komplexitätsreduzierten logischen Repräsentation eines Datensatzes von Sensordaten.

Das Verfahren umfasst ein Bereitstellen eines ersten Datensatzes von Sensordaten einer durch zumindest einen fahrzeugseitigen Sensor erfassten Fahrt eines Ego-Fahrzeugs.

Das Verfahren umfasst des Weiteren ein Transformieren des ersten Datensatzes in einen, eine Mehrzahl von eine Fahrzeugaktion repräsentierende Klassen eines logischen Szenarios aufweisenden zweiten Datensatz.

Ferner umfasst das Verfahren ein Anwenden eines Algorithmus auf den zweiten Datensatz zur Komplexitätsreduzierung des logischen Szenarios, und ein Ausgeben eines, ein komplexitätsreduziertes logisches Szenario des zweiten Datensatzes repräsentierenden dritten Datensatzes.

Die Erfindung betrifft überdies ein Verfahren zum Bereitstellen eines trainierten Algorithmus maschinellen Lernens zum Erzeugen einer komplexitätsreduzierten Repräsentation eines Datensatzes von Sensordaten.

Das Verfahren umfasst ein Empfangen eines eine Mehrzahl von eine Fahrzeugaktion repräsentierende Klassen eines logischen Szenarios aufweisenden ersten Trainingsdatensatzes sowie ein Empfangen eines ein komplexitätsreduziertes logisches Szenario des ersten Trainingsdatensatzes repräsentierenden zweiten Trainingsdatensatzes.

Darüber hinaus umfasst das Verfahren ein Trainieren des Algorithmus maschinellen Lernens durch einen Optimierungsalgorithmus, welcher einen Extremwert einer Verlustfunktion zum Erzeugen der komplexitätsreduzierten logischen Repräsentation des ersten Trainingsdatensatzes berechnet.

Die Erfindung betrifft ferner ein System zum Erzeugen einer komplexitätsreduzierten logischen Repräsentation eines Datensatzes von Sensordaten.

Das System umfasst einen fahrzeugseitigen Sensor zum Bereitstellen eines ersten Datensatzes von Sensordaten einer erfassten Fahrt eines Ego-Fahrzeugs sowie Mittel zum Transformieren des ersten Datensatzes in einen, eine Mehrzahl von eine Fahrzeugaktion repräsentierende Klassen eines logischen Szenarios aufweisenden zweiten Datensatz.

Darüber hinaus umfasst das System eine Steuereinheit zum Anwenden eines Algorithmus auf den zweiten Datensatz zur Komplexitätsreduzierung des logischen Szenarios, wobei die Steuereinheit dazu eingerichtet ist, einen ein komplexitätsreduziertes logisches Szenario des zweiten Datensatzes repräsentierenden dritten Datensatz auszugeben.

Eine Idee der vorliegenden Erfindung ist es, durch Erzeugen einer komplexitätsreduzierten logischen Repräsentation des Datensatzes von Sensordaten eine optimale Abstrahierung und Verallgemeinerung der Daten zu erreichen, bei welcher eine Komplexitätsreduzierung bzw. Datenverdichtung bei gleichzeitig bestmöglicher Beibehaltung des ursprünglichen Szenarios in Bezug auf Position, Zeit, relative Entfernungen und Geschwindigkeit der Verkehrsteilnehmer ermöglicht wird.

Auf diese Weise kann die Gesamtsituation, die in den Daten sichtbar ist, beibehalten werden, und zudem ermöglicht werden, Variablen auf einfache Art und Weise zu ändern, um dadurch die Situation zu variieren.

Eine Variierung der Situation bzw. des Szenarios ist für das Erzeugen neuer Testfälle basierend auf den durch den zumindest einen fahrzeugseitigen Sensor bereitgestellten Daten erforderlich.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der Algorithmus eine Anzahl von eine Fahrzeugaktion repräsentierenden Klassen minimiert und/oder einen Grad einer Übereinstimmung des komplexitätsreduzierten logischen Szenarios des dritten Datensatzes mit dem logischen Szenario des zweiten Datensatz maximiert.

Somit kann in vorteilhafter Weise eine bestmögliche Übereinstimmung des logischen Szenarios mit dem Ursprungsszenario bei gleichzeitig maximaler Datenkompression erreicht werden.

Gemäß einer weiteren bevorzugten Weiterbildung der Erfindung ist vorgesehen, dass das Transformieren des ersten Datensatzes in den, die Mehrzahl von eine Fahrzeugaktion repräsentierenden Klassen des logischen Szenarios aufweisenden zweiten Datensatz ein Selektieren, Extrahieren oder Klassifizieren von eine Änderung eines Fahrzeugzustands repräsentierenden Merkmalen des ersten Datensatzes umfasst.

Somit kann in vorteilhafter Weise eines einer Mehrzahl geeigneter Verfahren zur Transformation des Ursprungsszenarios in ein logisches Szenario verwendet werden.

Gemäß einer weiteren bevorzugten Weiterbildung der Erfindung ist vorgesehen, dass der Algorithmus dazu eingerichtet ist, zumindest einen Wert, eine Anzahl und/oder eine Art der Mehrzahl von eine Fahrzeugaktion repräsentierenden Klassen abzuändern. Somit kann eine optimale Komplexitätsreduzierung des Datensatzes ermöglicht werden.

Gemäß einer weiteren bevorzugten Weiterbildung der Erfindung ist vorgesehen, dass die Mehrzahl von eine Fahrzeugaktion repräsentierende Klassen zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs, einer Fahrspur ID und/oder einer zeit- oder ortsbezogenen Bedingung zum Ausführen einer Fahrzeugaktion umfasst. Somit kann in vorteilhafter Weise einer jeweiligen Fahrzeugaktion eine der Fahrzeugaktion entsprechende Klasse zugeordnet werden.

Gemäß einer weiteren bevorzugten Weiterbildung der Erfindung ist vorgesehen, dass die von der Mehrzahl von eine Fahrzeugaktion repräsentierende Klassen umfassten Werte zeitbezogene Daten, insbesondere eine Zeitdauer einer Längs- und/oder Querbeschleunigung des Ego-Fahrzeugs und/oder ortsbezogene Daten, insbesondere eine Wegstrecke der Längs- und/oder Querbeschleunigung des Ego-Fahrzeugs sind.

Die Verwendung ortsbezogener Daten stellt dabei sicher, dass beispielsweise eine bestimmte Geschwindigkeit an einem definierten geographischen Punkt erreicht ist oder eine Beschleunigung mit einer vorgegebenen Rate von einem ersten geographischen Punkt zu einem zweiten geographischen Punkt erfolgt.

Gemäß einer weiteren bevorzugten Weiterbildung der Erfindung ist vorgesehen, dass die ortsbezogenen Daten Relativdaten des Ego-Fahrzeugs in Bezug zu weiteren Kraftfahrzeugen und/oder festen Objekten, insbesondere ein Abstand weiterer Kraftfahrzeuge und/oder fester Objekte zum Ego-Fahrzeug sind.

Die Verwendung solcher relativer Bezüge wie z.B. einer Definition von Abständen relativ zum Ego-Fahrzeug oder ortbezogener Aktionen wie z.B. einer Einleitung eines Bremsvorgangs ab einem bestimmten geographischen Punkt oder ab einem vorgegebenen Abstand zu einem anderen Fahrzeug weist den Vorteil auf, dass das Verfahren fahrzeugübergreifend eine exakte Wiedergabe des Ursprungsszenarios ermöglicht.

Gemäß einer weiteren bevorzugten Weiterbildung der Erfindung ist vorgesehen, dass die ortsbezogenen Daten ortsbezogene Aktionen, insbesondere ein Beginn einer Fahrzeugaktion ab einem ersten geographischen Punkt, ein Ende der Fahrzeugaktion ab einem zweiten geographischen Punkt und/oder ein Beginn der Fahrzeugaktion, wenn eine vorgegebene Bedingung, insbesondere wenn ein Abstand weiterer Kraftfahrzeuge und/oder fester Objekte relativ zum Ego-Fahrzeug einen vorgegebenen Schwellwert unter- oder überschreitet, erfüllt ist, sind.

Die Verwendung ortsbezogener Aktionen weist den Vorteil auf, dass das Ursprungsszenario hierdurch exakt übertragbar ist, und wobei der Einsatz unterschiedlicher Fahrzeuge im Ursprungsszenario und dem logischen Szenario keinen Einfluss auf eine Exaktheit der Übertragung als auch einen Grad einer Datenverdichtung bzw. Komplexitätsreduzierung aufweist.

Gemäß einer weiteren bevorzugten Weiterbildung der Erfindung ist vorgesehen, dass der Algorithmus, insbesondere für eine vorgegebene Anzahl von Optimierungszyklen, auf den durch den Algorithmus ausgegebenen dritten Datensatz angewendet wird.

Somit kann in vorteilhafter Weise eine kontinuierliche Optimierung der Parameter Komplexitätsreduzierung sowie Datenverdichtung des Datensatzes erreicht werden.

Gemäß einer weiteren bevorzugten Weiterbildung der Erfindung ist vorgesehen, dass berechnet wird, ob das durch den dritten Datensatz repräsentierte logische Szenario ein vorgegebenes Ausschlusskriterium, insbesondere ein Auftreten eines Verkehrsunfalls, ein Verstoß gegen eine Straßenverkehrsordnung und/oder ein Eingreifen eines Fahrerassistenzsystems erfüllt.

Sollte ein solches Ausschlusskriterium vorliegen, führt die Komplexitätsreduzierung des zweiten Datensatzes daher zu einer Ungenauigkeit, die in dem Ausschlusskriterium resultiert. Somit kann das Erfüllen des Ausschlusskriteriums effektiv detektiert werden.

Gemäß einer weiteren bevorzugten Weiterbildung der Erfindung ist vorgesehen, dass eine Abweichung des dritten Datensatzes vom zweiten Datensatz berechnet wird, wobei falls die Abweichung außerhalb eines vorgegebenen Bereiches liegt und/oder das Erfüllen des Ausschlusskriteriums bewirkt, die weitere Optimierung des dritten Datensatzes durch den Algorithmus beendet und/oder ein zuletzt durch den Algorithmus ausgegebener dritter Datensatz verworfen wird.

Somit kann beispielsweise ein letzter Optimierungsschritt rückgängig gemacht und die Optimierung mit einer vorhergehenden Version des zweiten Datensatzes fortgesetzt werden.

Gemäß einer weiteren bevorzugten Weiterbildung der Erfindung ist vorgesehen, dass das Berechnen der Abweichung des dritten Datensatzes vom zweiten Datensatz nach jeder Optimierungsschleife des Algorithmus, in vorgegebenen Intervallen und/oder am Ende eines festgelegten Optimierungszyklus durchgeführt wird.

Damit kann in vorteilhafter Weise sichergestellt werden, dass die Optimierung des zweiten Datensatzes nicht in einem Ausschlusskriterium, insbesondere einem Auftreten eines Verkehrsunfalls, einem Verstoß gegen eine Straßenverkehrsordnung und/oder einem Eingreifen eines Fahrerassistenzsystems resultiert.

Gemäß einer weiteren bevorzugten Weiterbildung der Erfindung ist vorgesehen, dass der Algorithmus ein Algorithmus maschinellen Lernens, insbesondere ein künstliches neuronales Netz, ein Greedy-Algorithmus oder ein Hill-Climbing-Algorithmus ist.

Somit kann in vorteilhafter Weise einer einr Mehrzahl geeigneter Algorithmen zur Komplexitätsreduzierung des logischen Szenarios eingesetzt werden.

Die hierin beschriebenen Merkmale des Verfahrens zum Erzeugen einer komplexitätsreduzierten logischen Repräsentation eines Datensatzes von Sensordaten sind ebenso auf das erfindungsgemäße System zum Erzeugen einer komplexitätsreduzierten logischen Repräsentation eines Datensatzes von Sensordaten und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zum Erzeugen einer komplexitätsreduzierten logischen Repräsentation eines Datensatzes von Sensordaten gemäß einer bevorzugten Ausführungsform der Erfindung;
- Fig. 2: ein Ablaufdiagramm eines Verfahrens zum Bereitstellen eines trainierten Algorithmus maschinellen Lernens zum Erzeugen einer komplexitätsreduzierten Repräsentation eines Datensatzes von Sensordaten gemäß der bevorzugten Ausführungsform der Erfindung; und
- Fig. 3: eine schematische Darstellung eines Systems zum Erzeugen einer komplexitätsreduzierten logischen Repräsentation eines Datensatzes von Sensordaten gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

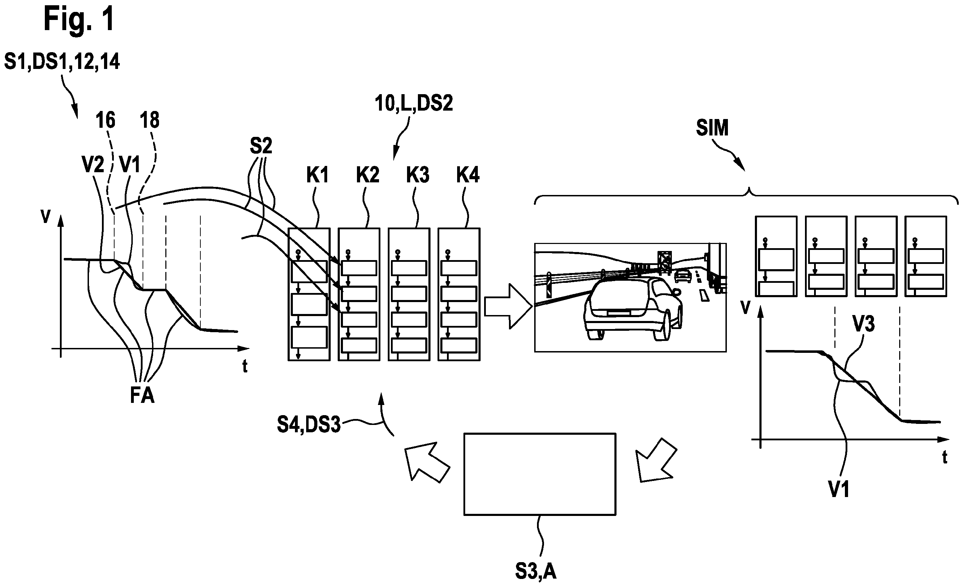

Das in Fig. 1 gezeigte Verfahren umfasst ein Bereitstellen S1 eines ersten Datensatzes von Sensordaten einer durch zumindest einen fahrzeugseitigen Sensor erfassten Fahrt eines Ego-Fahrzeugs 14.

Ein erster Geschwindigkeitsverlauf V1 des Ego-Fahrzeugs 14 weist dabei eine Anzahl von Fahrzeugaktionen FA, z.B. Bereiche mit im Wesentlichen konstanter Geschwindigkeit sowie Bremsvorgängen auf. Die Vertikalachse der Darstellung gibt eine Geschwindigkeit v, die Horizontalachse eine Zeit t an.

Das Verfahren umfasst des Weiteren ein Transformieren S2 des ersten Datensatzes DS1 in einen, eine Mehrzahl von eine Fahrzeugaktion FA repräsentierende Klassen K1, K2, K3, K4 eines logischen Szenarios L aufweisenden zweiten Datensatz DS2.

Das Transformieren S2 des ersten Datensatzes DS1 in den, die Mehrzahl von eine Fahrzeugaktion FA repräsentierenden Klassen K1, K2, K3, K4 des logischen Szenarios L aufweisenden zweiten Datensatz DS2 umfasst dabei ein Selektieren, Extrahieren oder Klassifizieren von eine Änderung eines Fahrzeugzustands repräsentierenden Merkmalen des ersten Datensatzes DS1.

Der transformierte Datensatz DS2 ist als zweiter Geschwindigkeitsverlauf V2 dargestellt.

Im Anschluss daran erfolgt optional ein Simulationsschritt SIM, in welchem unter Verwendung des Datensatzes DS2 die Mehrzahl von eine Fahrzeugaktion FA repräsentierende Klassen K1, K2, K3, K4 eines logischen Szenarios L simuliert werden. Ferner erfolgt der Simulationsschritt SIM nach jeder Optimierungsschleife des dritten Datensatzes DS3.

Der optimierte Datensatz DS3 weist einen dritten Geschwindigkeitsverlauf V3 des Ego-Fahrzeugs 14 auf. Dieser behält das Szenario im Wesentlichen bei, weist jedoch durch eine reduzierte Anzahl von Fahrzeugaktion FA eine geringere Komplexität gegenüber dem ersten Geschwindigkeitsverlauf V1 und dem zweiten Geschwindigkeitsverlauf V2 auf.

Das Verfahren umfasst ferner ein Anwenden S3 eines Algorithmus A auf den zweiten Datensatz DS2 zur Komplexitätsreduzierung des logischen Szenarios L und ein Ausgeben S4 eines, ein komplexitätsreduziertes logisches Szenario L des zweiten Datensatzes DS2 repräsentierenden dritten Datensatzes DS3.

Der Algorithmus A minimiert eine Anzahl von eine Fahrzeugaktion FA repräsentierenden Klassen K1, K2, K3, K4 und/oder maximiert einen Grad einer Übereinstimmung des komplexitätsreduzierten logischen Szenarios L des dritten Datensatzes DS3 mit dem logischen Szenario des zweiten Datensatz DS2.

Der Algorithmus A ist dazu eingerichtet, zumindest einen Wert, eine Anzahl und/oder eine Art der Mehrzahl von eine Fahrzeugaktion FA repräsentierenden Klassen K1, K2, K3, K4 abzuändern.

Die Mehrzahl von eine Fahrzeugaktion FA repräsentierende Klassen K1, K2, K3, K4 umfasst zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs 14, einer Fahrspur ID und/oder einer zeit- oder ortsbezogenen Bedingung zum Ausführen einer Fahrzeugaktion FA.

Die von der Mehrzahl von eine Fahrzeugaktion FA repräsentierende Klassen K1, K2, K3, K4 umfassten Werte sind zeitbezogene Daten, insbesondere eine Zeitdauer einer Längs- und/oder Querbeschleunigung des Ego-Fahrzeugs 14 und/oder ortsbezogene Daten, insbesondere eine Wegstrecke der Längs- und/oder Querbeschleunigung des Ego-Fahrzeugs 14.

Die ortsbezogenen Daten sind Relativdaten des Ego-Fahrzeugs 14 in Bezug zu weiteren Kraftfahrzeugen und/oder festen Objekten, insbesondere ein Abstand weiterer Kraftfahrzeuge und/oder fester Objekte zum Ego-Fahrzeug 14.

Die ortsbezogenen Daten sind ortsbezogene Aktionen, insbesondere ein Beginn einer Fahrzeugaktion FA ab einem ersten geographischen Punkt 16, ein Ende der Fahrzeugaktion FA ab einem zweiten geographischen Punkt 18 und/oder ein Beginn der Fahrzeugaktion FA, wenn eine vorgegebene Bedingung, insbesondere wenn ein Abstand weiterer Kraftfahrzeuge und/oder fester Objekte relativ zum Ego-Fahrzeug 14 einen vorgegebenen Schwellwert unter- oder überschreitet, erfüllt ist.

Der Algorithmus A wird, insbesondere für eine vorgegebene Anzahl von Optimierungszyklen, auf den durch den Algorithmus A ausgegebenen dritten Datensatz DS3 angewendet.

Ferner wird berechnet, ob das durch den dritten Datensatz DS3 repräsentierte logische Szenario L ein vorgegebenes Ausschlusskriterium, insbesondere ein Auftreten eines Verkehrsunfalls, ein Verstoß gegen eine Straßenverkehrsordnung und/oder ein Eingreifen eines Fahrerassistenzsystems erfüllt.

Des Weiteren wird eine Abweichung des dritten Datensatzes DS3 vom zweiten Datensatz DS2 berechnet, wobei falls die Abweichung außerhalb eines vorgegebenen Bereiches liegt und/oder das Erfüllen des Ausschlusskriteriums bewirkt, die weitere Optimierung des dritten Datensatzes DS3 durch den Algorithmus A beendet und/oder ein zuletzt durch den Algorithmus A ausgegebener dritter Datensatz DS3 verworfen wird.

Das Berechnen der Abweichung des dritten Datensatzes DS3 vom zweiten Datensatz DS2 nach jeder Optimierungsschleife des Algorithmus A, wird in vorgegebenen Intervallen und/oder am Ende eines festgelegten Optimierungszyklus durchgeführt.

Der Algorithmus A ist vorzugsweise ein Algorithmus maschinellen Lernens, insbesondere ein künstliches neuronales Netz. Alternativ kann der Algorithmus A beispielsweise durch einen Greedy-Algorithmus oder einen Hill-Climbing-Algorithmus ausgebildet sein.

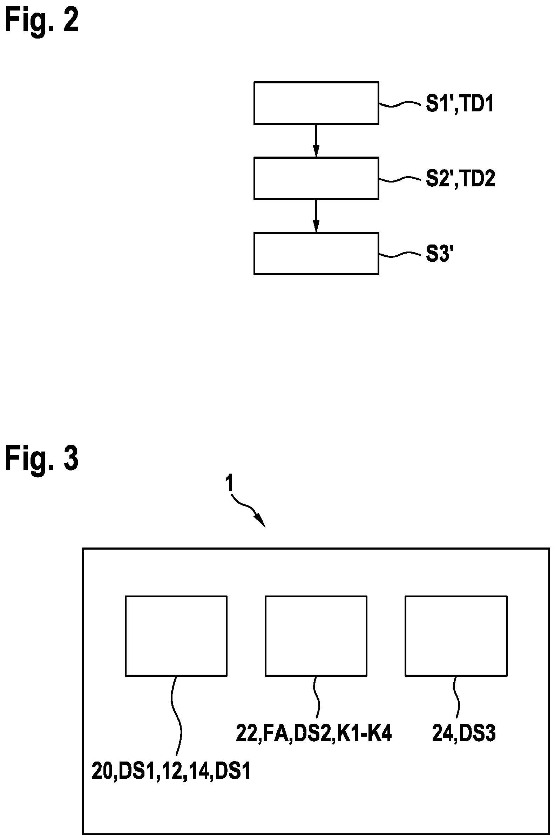

Fig. 2 zeigt ein Ablaufdiagramm eines Verfahrens zum Bereitstellen eines trainierten Algorithmus maschinellen Lernens zum Erzeugen einer komplexitätsreduzierten Repräsentation eines Datensatzes von Sensordaten gemäß der bevorzugten Ausführungsform der Erfindung.

Das Verfahren umfasst ein Empfangen S1' eines eine Mehrzahl von eine Fahrzeugaktion FA repräsentierende Klassen K1, K2, K3, K4 eines logischen Szenarios L aufweisenden ersten Trainingsdatensatzes TD1.

Ferner umfasst das Verfahren ein Empfangen S2' eines ein komplexitätsreduziertes logisches Szenario L des ersten Trainingsdatensatzes TD1 repräsentierenden zweiten Trainingsdatensatzes TD2.

Das Verfahren umfasst darüber hinaus ein Trainieren S3' des Algorithmus A maschinellen Lernens durch einen Optimierungsalgorithmus, welcher einen Extremwert einer Verlustfunktion zum Erzeugen der komplexitätsreduzierten logischen Repräsentation 10 des ersten Trainingsdatensatzes TD1 berechnet.

Fig. 3 zeigt eine schematische Darstellung eines Systems zum Erzeugen einer komplexitätsreduzierten logischen Repräsentation eines Datensatzes von Sensordaten gemäß der bevorzugten Ausführungsform der Erfindung.

Das System umfasst einen fahrzeugseitigen Sensor 12 zum Bereitstellen eines ersten Datensatzes DS1 von Sensordaten einer durch zumindest einen fahrzeugseitigen Sensor 12 erfassten Fahrt eines Ego-Fahrzeugs 14.

Das System umfasst ferner Mittel 22 zum Transformieren des ersten Datensatzes DS1 in einen, eine Mehrzahl von eine Fahrzeugaktion FA repräsentierende Klassen K1, K2, K3, K4 eines logischen Szenarios L aufweisenden zweiten Datensatz DS2.

Des Weiteren umfasst das System eine Steuereinheit 24 zum Anwenden S3 eines Algorithmus A auf den zweiten Datensatz DS2 zur Komplexitätsreduzierung des logischen Szenarios L, wobei die Steuereinheit 24 dazu eingerichtet ist, einen ein komplexitätsreduziertes logisches Szenario L des zweiten Datensatzes DS2 repräsentierenden dritten Datensatz DS3 auszugeben.

### Bezugszeichenliste

- 1: System
- 10: logischen Repräsentation
- 12: fahrzeugseitiger Sensor
- 14: Ego-Fahrzeug
- 16: erster geographischer Punkt
- 18: zweiter geographischer Punkt
- 22: Mittel
- 24: Steuereinheit
- A: Algorithmus
- DS1: erster Datensatz
- DS2: zweiter Datensatz
- DS3: dritter Datensatz
- FA: Fahrzeugaktion
- K1-K4: Klassen
- L: logisches Szenario
- S1-S4: Verfahrensschritte
- S1'-S3': Verfahrensschritte
- T: Zeit
- TD1: erster Trainingsdatensatz
- TD2: zweiter Trainingsdatensatz
- V: Geschwindigkeit des Ego-Fahrzeugs
- V1: erster Geschwindigkeitsverlauf
- V2: zweiter Geschwindigkeitsverlauf

## Patentansprüche

1. Verfahren zum Erzeugen einer komplexitätsreduzierten logischen Repräsentation (10) eines Datensatzes von Sensordaten, mit den Schritten:
Bereitstellen (S1) eines ersten Datensatzes (DS1) von Sensordaten einer durch zumindest einen fahrzeugseitigen Sensor (12) erfassten Fahrt eines Ego-Fahrzeugs (14);
Transformieren (S2) des ersten Datensatzes (DS1) in einen, eine Mehrzahl von eine Fahrzeugaktion (FA) repräsentierende Klassen (K1, K2, K3, K4) eines logischen Szenarios (L) aufweisenden zweiten Datensatz (DS2);
Anwenden (S3) eines Algorithmus (A) auf den zweiten Datensatz (DS2) zur Komplexitätsreduzierung des logischen Szenarios (L); und
Ausgeben (S4) eines, ein komplexitätsreduziertes logisches Szenario (L) des zweiten Datensatzes (DS2) repräsentierenden dritten Datensatzes (DS3).

2. Verfahren nach Anspruch 1, wobei der Algorithmus (A) eine Anzahl von eine Fahrzeugaktion (FA) repräsentierenden Klassen (K1, K2, K3, K4) minimiert und/oder einen Grad einer Übereinstimmung des komplexitätsreduzierten logischen Szenarios (L) des dritten Datensatzes (DS3) mit dem logischen Szenario des zweiten Datensatz (DS2) maximiert.

3. Verfahren nach Anspruch 1 oder 2, wobei das Transformieren (S2) des ersten Datensatzes (DS1) in den, die Mehrzahl von eine Fahrzeugaktion (FA) repräsentierenden Klassen (K1, K2, K3, K4) des logischen Szenarios (L) aufweisenden zweiten Datensatz (DS2) ein Selektieren, Extrahieren oder Klassifizieren von eine Änderung eines Fahrzeugzustands repräsentierenden Merkmalen des ersten Datensatzes (DS1) umfasst.

4. Verfahren nach einem der vorhergehenden Ansprüche, wobei der Algorithmus (A) dazu eingerichtet ist, zumindest einen Wert, eine Anzahl und/oder eine Art der Mehrzahl von eine Fahrzeugaktion (FA) repräsentierenden Klassen (K1, K2, K3, K4) abzuändern.

5. Verfahren nach einem der vorhergehenden Ansprüche, wobei die Mehrzahl von eine Fahrzeugaktion (FA) repräsentierende Klassen (K1, K2, K3, K4) zumindest einen Wert eines Beschleunigungsvorgangs, eines Bremsvorgangs, eines Richtungs- und/oder Fahrspurwechsels, einer Fahrt mit konstanter Geschwindigkeit des Ego-Fahrzeugs (14), einer Fahrspur ID und/oder einer zeit- oder ortsbezogenen Bedingung zum Ausführen einer Fahrzeugaktion (FA) umfasst.

6. Verfahren nach einem der vorhergehenden Ansprüche, wobei die von der Mehrzahl von eine Fahrzeugaktion (FA) repräsentierende Klassen (K1, K2, K3, K4) umfassten Werte zeitbezogene Daten, insbesondere eine Zeitdauer einer Längs- und/oder Querbeschleunigung des Ego-Fahrzeugs (14) und/oder ortsbezogene Daten, insbesondere eine Wegstrecke der Längs- und/oder Querbeschleunigung des Ego-Fahrzeugs (14) sind.

7. Verfahren nach Anspruch 6, wobei die ortsbezogenen Daten Relativdaten des Ego-Fahrzeugs (14) in Bezug zu weiteren Kraftfahrzeugen und/oder festen Objekten, insbesondere ein Abstand weiterer Kraftfahrzeuge und/oder fester Objekte zum Ego-Fahrzeug (14) sind.

8. Verfahren nach Anspruch 7, wobei die ortsbezogenen Daten ortsbezogene Aktionen, insbesondere ein Beginn einer Fahrzeugaktion (FA) ab einem ersten geographischen Punkt (16), ein Ende der Fahrzeugaktion (FA) ab einem zweiten geographischen Punkt (18) und/oder ein Beginn der Fahrzeugaktion (FA), wenn eine vorgegebene Bedingung, insbesondere wenn ein Abstand weiterer Kraftfahrzeuge und/oder fester Objekte relativ zum Ego-Fahrzeug (14) einen vorgegebenen Schwellwert unter- oder überschreitet, erfüllt ist, sind.

9. Verfahren nach einem der vorhergehenden Ansprüche, wobei der Algorithmus (A), insbesondere für eine vorgegebene Anzahl von Optimierungszyklen, auf den durch den Algorithmus (A) ausgegebenen dritten Datensatz (DS3) angewendet wird.

10. Verfahren nach einem der vorhergehenden Ansprüche, wobei berechnet wird, ob das durch den dritten Datensatz (DS3) repräsentierte logische Szenario (L) ein vorgegebenes Ausschlusskriterium, insbesondere ein Auftreten eines Verkehrsunfalls, ein Verstoß gegen eine Straßenverkehrsordnung und/oder ein Eingreifen eines Fahrerassistenzsystems erfüllt.

11. Verfahren nach Anspruch 10, wobei eine Abweichung des dritten Datensatzes (DS3) vom zweiten Datensatz (DS2) berechnet wird, wobei falls die Abweichung außerhalb eines vorgegebenen Bereiches liegt und/oder das Erfüllen des Ausschlusskriteriums bewirkt, die weitere Optimierung des dritten Datensatzes (DS3) durch den Algorithmus (A) beendet und/oder ein zuletzt durch den Algorithmus (A) ausgegebener dritter Datensatz (DS3) verworfen wird.

12. Verfahren nach Anspruch 11, wobei das Berechnen der Abweichung des dritten Datensatzes (DS3) vom zweiten Datensatz (DS2) nach jeder Optimierungsschleife des Algorithmus (A), in vorgegebenen Intervallen und/oder am Ende eines festgelegten Optimierungszyklus durchgeführt wird.

13. Verfahren nach einem der vorhergehenden Ansprüche, wobei der Algorithmus (A) ein Algorithmus (A) maschinellen Lernens, insbesondere ein künstliches neuronales Netz, ein Greedy-Algorithmus (A) oder ein Hill-Climbing-Algorithmus (A) ist.

14. Verfahren zum Bereitstellen eines trainierten Algorithmus (A) maschinellen Lernens zum Erzeugen einer komplexitätsreduzierten Repräsentation eines Datensatzes von Sensordaten, mit den Schritten:
Empfangen (S1') eines eine Mehrzahl von eine Fahrzeugaktion (FA) repräsentierende Klassen (K1, K2, K3, K4) eines logischen Szenarios (L) aufweisenden ersten Trainingsdatensatzes (TD1);
Empfangen (S2') eines ein komplexitätsreduziertes logisches Szenario (L) des ersten Trainingsdatensatzes (TD1) repräsentierenden zweiten Trainingsdatensatzes (TD2); und
Trainieren (S3') des Algorithmus (A) maschinellen Lernens durch einen Optimierungsalgorithmus, welcher einen Extremwert einer Verlustfunktion zum Erzeugen der komplexitätsreduzierten logischen Repräsentation (10) des ersten Trainingsdatensatzes (TD1) berechnet.

15. System zum Erzeugen einer komplexitätsreduzierten logischen Repräsentation (10) eines Datensatzes von Sensordaten, mit:
zumindest einem fahrzeugseitigen Sensor (12) zum Bereitstellen eines ersten Datensatzes (DS1) von Sensordaten einer erfassten Fahrt eines Ego-Fahrzeugs (14);
Mitteln (22) zum Transformieren des ersten Datensatzes (DS1) in einen, eine Mehrzahl von eine Fahrzeugaktion (FA) repräsentierende Klassen (K1, K2, K3, K4) eines logischen Szenarios (L) aufweisenden zweiten Datensatz (DS2);
einer Steuereinheit (24) zum Anwenden (S3) eines Algorithmus (A) auf den zweiten Datensatz (DS2) zur Komplexitätsreduzierung des logischen Szenarios (L), wobei die Steuereinheit (24) dazu eingerichtet ist, einen ein komplexitätsreduziertes logisches Szenario (L) des zweiten Datensatzes (DS2) repräsentierenden dritten Datensatz (DS3) auszugeben.
